# EUROPÄISCHE PATENTSCHRIFT

(11) **EP 3 235 665 B1**
(45) Veröffentlichungstag und Bekanntmachung des Hinweises auf die Patenterteilung: **12.12.2018**
(21) Anmeldenummer: 17164672.2
(22) Anmeldetag: 04.04.2017
(51) Int. Cl.: B60C 27/08, B60C 27/06

(54) **KETTE ZUR MONTAGE AN EINEM FAHRZEUGREIFEN**
CHAIN FOR FITTING TO A VEHICLE TYRE
CHAÎNE À MONTER SUR UN PNEU DE VÉHICULE

(30) Priorität: 19.04.2016 AT 503482016
(43) Veröffentlichungstag der Anmeldung: 25.10.2017
(73) Patentinhaber: Pewag Schneeketten GmbH, 8041 Graz (AT)
(72) Erfinder: Schmid, Karl, 8580 Köflach (AT)
(74) Vertreter: Patentanwaltskanzlei Matschnig & Forsthuber OG

(56) Entgegenhaltungen:
- EP-A2- 0 090 765
- US-A- 1 219 088

## Beschreibung

Die Erfindung betrifft eine Kette zur Montage an einem Fahrzeugreifen, insbesondere Gleitschutzkette, mit einem Kettennetz, welches im montierten Zustand der Kette zumindest auf der Lauffläche eines Fahrzeugreifens angeordnet ist und eine Anzahl von Kettensträngen aufweist, die jeweils aus einer Anzahl von Kettengliedern mit je im Wesentlichen geraden und zueinander parallelen Längsschenkeln gebildet sind und die an ihren Enden miteinander durch Verbindungsringe, verbunden sind und die Kettenglieder der Kettenstränge im montierten Zustand der Kette auf der Lauffläche aufliegend in abwechselnd positivem und negativem Winkel in Bezug auf die Lauffläche.

Bei erfindungsgemäßen Ketten, die insbesondere als Reifenketten oder Gleitschutzketten zum Einsatz kommen, kann das Laufnetz zur Gänze als Kettennetz ausgebildet sein oder nur zum Teil. Ketten dieser Art sind aus dem Stand der Technik bekannt. Beispielsweise beschreibt AT 511 844 B1 der Anmelderin eine Kette, in der das Laufnetz zur Gänze als Kettennetz ausgebildet ist, wobei die Kettenglieder der Kettenstränge abwechselnd auf der Lauffläche stehen oder über der Lauffläche liegend orientiert sind.

Bei dieser herkömmlichen Anordnung übertragen hauptsächlich die stehenden Glieder die Kräfte auf den Untergrund und sind für die Traktion zuständig. Bei Gebrauch nützen sich daher in erster Linie diese stehenden Glieder ab, sodass der Verschleiß bei den stehenden Kettengliedern die Lebensdauer der Kette bestimmt, während die liegenden Kettenglieder nur geringem Verschleiß unterworfen sind. Die liegenden Kettenglieder stellen Bindeglieder dar, die kaum Verschleißfunktion haben.

In dieser Beziehung ergibt sich beim Einsatz einer Reifenkette der eingangs genannten Art eine Verbesserung, da es zu einer gleichmäßigeren Verteilung des Verschleißes kommt, wobei zusätzliche Verschleißelemente die Lebensdauer der Kette erhöhen können. Aus der DE 856107 C geht eine solche Kette hervor, bei welcher die im Bereich der Lauffläche liegenden Kettenglieder je einen frei drehbaren Verschleißring tragen. Abgesehen von der komplizierten Herstellung einer solchen Kette ist die Greifwirkung auf Grund der theoretisch nur punktförmigen Auflage der Verschleißringe besonders bei einer festen und glatten Bodenbeschaffenheit nur gering.

Auch die US 1 219 088 zeigt eine Reifenkette, bei welcher die Glieder des Laufnetzes auf ihren Schenkeln mit Vorsprüngen versehen sind, die offenbar zur Erhöhung der Griffigkeit der Kette gedacht sind. Die Kettenstränge an der Lauffläche sind direkt, ohne Verwendung von Verbindungsringen ineinander gehängt, wobei drei Kettenglieder ineinander greifen und eine starkem Verschleiß ausgesetzten Verbindungsknoten bilden. Die genannte Verbindungsweise der Kettenstränge kompliziert auch die Herstellung der Kette als solcher.

Das Dokument EP 0 090 765 A2 zeigt eine gattungsbildende Reifenkette, bei welcher die Stränge des Laufnetzes durch Verbindungsringe verbunden sind, wobei abwechselnd stehende und liegende Kettenglieder ineinander gehängt sind. Dabei bestehen die Kettenglieder aus einem U-förmigen Unterteil und einem auf diesen aufgeschweißten, als Stützbalken bezeichneten Oberteil.
Es ist eine Aufgabe der Erfindung, die Nachteile der bekannten Reifenketten zu beseitigen bzw. zu mildern.

Diese Aufgabe wird durch eine Kette der eingangs genannten Art gelöst, bei welcher erfindungsgemäß die Verschleißelemente als Verschleißstege ausgebildet sind, welche mit Kettengliedern des Kettennetzes fest verbunden sind und die sich parallel zu den Längsschenkeln der Kettenglieder erstrecken, und die Verbindungsringe im montierten Zustand der Kette im Wesentlichen mit ihrer Hauptebene parallel zur Lauffläche orientiert sind.
Dank der Erfindung ergibt sich eine Reifenkette mit vorzüglicher Traktion und guten Verschleißeigenschaften, wobei das Gewicht geringer gehalten werden kann, als bei Ketten herkömmlicher Bauart mit vergleichbaren Verschleiß- und Traktionseigenschaften
Die Traktion kann weiter verbessert werden, falls die Verschleißstege eine profilierte Verschleißfläche besitzen.
Hierbei ist es besonders vorteilhaft, wenn die Verschleißfläche der Verschleißstege ein Rillenprofil mit sich parallel zu dem zugehörigen Längsschenkel erstreckenden Vertiefungen und Erhebungen aufweist.
Bei einer praxisbewährten Ausführung ist vorgesehen, dass sich die Verschleißstege in Richtung ihrer Höhe im Wesentlichen senkrecht zur Lauffläche erstrecken.

Weiters hat es sich als empfehlenswert erwiesen, wenn die Verschleißstege eine Länge aufweisen, die im Wesentlichen der Länge der Längsschenkel der Kettenglieder entspricht.

Auch ist es zweckmäßig, wenn die Verschleißstege mindestens eine Breite aufweisen, die im Wesentlichen der Breitenabmessung der Längsschenkel der Kettenglieder entspricht.

Wenngleich nicht unbedingt erforderlich, ist es doch in vielen Fällen ratsam, wenn die Verschleißstege aus einem Material bestehen, das verschleißfester ist, als das Material der Kettenglieder.

In Hinblick auf eine ökonomische Produktion ist es weiters vorteilhaft, wenn die Verschleißstege auf die Kettenglieder aufgeschweißt sind.

In einer bevorzugten Ausführungsform der Erfindung kann vorgesehen sein, dass die Anzahl der Kettenglieder in den Kettensträngen gerade ist, insbesondere zwei, vier oder sechs. In Folge der geraden Anzahl der Kettenglieder, die zueinander querliegend, vorzugsweise orthogonal, orientiert sind somit die Endglieder der Kettenstränge zueinander quer, vorzugsweise orthogonal, orientiert, wodurch sich daher "automatisch" eine Schrägstellung der Kettenglieder ergibt.

Um eine besonders einfache Verbindung der Kettenstränge mit den Verbindungsringen zu ermöglichen, kann in einer günstigen Ausgestaltung der Erfindung vorgesehen sein, dass zumindest die Kettenglieder am Ende der Kettenstränge eine Innenöffnung aufweisen, in die ein Ringstrang des Verbindungselements, insbesondere der Verbindungsring, in einem spitzen Winkel zur Hauptebene des jeweiligen Kettengliedes aufnehmbar ist. Der spitze Winkel kann bevorzugt einen Wert von 45° ± 15° aufweisen. Der genaue Wert des Winkels ergibt sich aus der inneren Weite des Kettengliedes und der Dicke des Ringes.

In einer weiteren vorteilhaften Ausführungsform der Erfindung können die Verbindungsringe im montierten Zustand der Kette im Wesentlichen mit ihrer Hauptebene parallel zur Lauffläche orientiert sein, wobei bei zumindest einigen der Verbindungsringe der Ringstrang gegenüber der Hauptebene des Ringes gekröpft ist, nämlich gegenüber einer gedachten Ebene abwechselnd um eine Kröpfungsweite ausgelenkt, wodurch sich die Kette besser in der gewünschten schrägen Stellung ausrichten kann. Die gekröpften Verbindungsringe erlauben eine gezielte Unterstützung bzw. Stabilisierung der Schrägstellung der Endglieder und somit auch der Zwischenglieder der Kette. Durch eine sorgfältige Dimensionierung der Verbindungsringe in Verbindung mit den Kettengliedern können formstabile Schrägstellungen der Kettenglieder gezielt vorgegeben werden.

Gemäß einer Weiterbildung dieses Gedankens kann in einer günstigen Ausgestaltung der Erfindung vorgesehen sein, dass bei zumindest einigen der Verbindungsringe der Ringstrang bei einer einer Mittelachse zugewandten Seite seines Querschnitts eine ovale Formgebung, vorzugsweise eines Ellipsenabschnitts aufweist.

Da auch die Reifenschulter in vielen Fahrsituationen Bodenberührung hat, kann es vorteilhaft sein, wenn zumindest das erste an einen Verbindungsring anschließende Kettenglied eines Schulterkettenabschnittes einen Verschleißsteg trägt.

Die Erfindung samt weiteren Einzelheiten und Vorzügen wird nachstehend anhand eines nicht einschränkenden Ausführungsbeispiels näher erläutert, das in den Zeichnungen dargestellt ist. Diese zeigen schematisch:

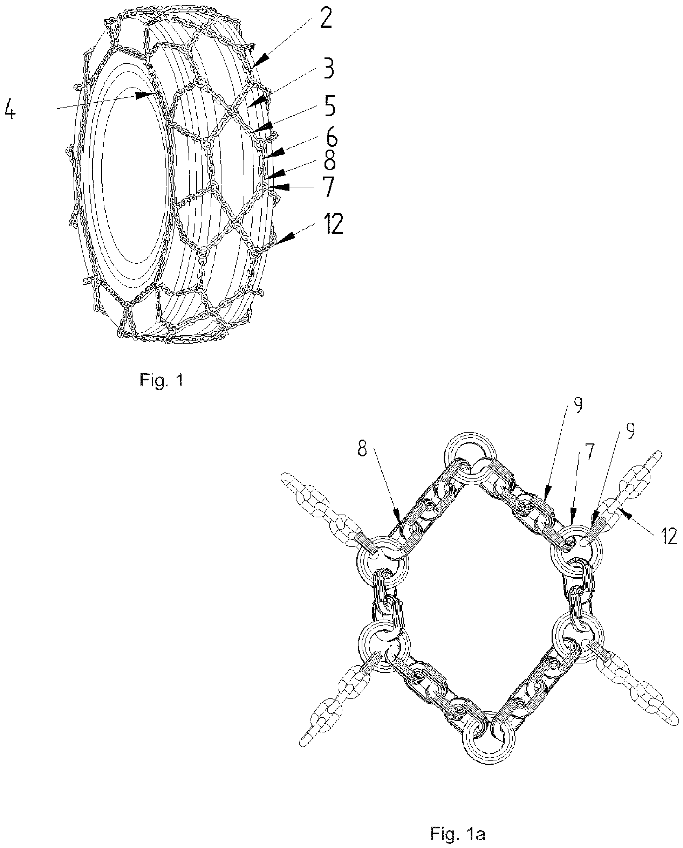

Fig. 1 ein Ausführungsbeispiel einer Reifenkette gemäß der Erfindung in montiertem Zustand in einer perspektivischen Ansicht, allerdings ohne Verschleißstege, um die Darstellung zu vereinfachen,
Fig. 1 a in einem Detail der Fig. 1 in vergrößerter Darstellung einen Ausschnitt der Reifenkette, nun mit eingezeichneten Verschleißstegen,
Fig. 2 einen viergliedrigen Kettenstrang der Reifenkette in einer perspektivischen Ansicht,
Fig. 3 den Kettenstrang der Fig. 2 in einer Längsansicht,
Fig. 4 und 5 zwei Ansichten des Kettenstrangs der Fig. 4 aus anderen Blickwinkeln,
Fig. 6 in einer Ansicht entsprechend Fig. 5 einen Kettenstrang einer abgeänderten Ausführungsform,
Fig. 7a bis 7c drei Ausführungsformen mit unterschiedlicher Lage der Verschleißstege bezüglich der Kettenglieder,
Fig. 8a bis 8c den Verbindungsring der Reifenkette in Draufsicht (Fig. 4a), in einer geschnittenen Seitenansicht und in einer perspektivischen Ansicht,
Fig. 9a bis 9c eine alternative Ausführungsform des Verbindungsrings der Reifenkette in einer Drauf, in einer Seitenansicht und in einer perspektivischen Ansicht.
Fig. 10a, 10b und 10c eine weitere alternative Ausführungsform des Verbindungsrings der Reifenkette in Draufsicht, in einer Seitenansicht und in einer perspektivischen Ansicht.

In den Figuren sind aus Gründen der Übersichtlichkeit gleiche Elemente mit denselben Bezugszeichen versehen.

Fig. 1 zeigt eine Reifenkette 1 gemäß einem Ausführungsbeispiel der Erfindung in auf einem Fahrzeugreifen montierten Zustand. Fig. 1 soll die Kette ganz allgemein zeigen, wobei weiter unten beschriebene und für die Erfindung wesentliche Verschleißglieder der übersichtlicheren Darstellung wegen in Fig. 1 nicht eingezeichnet sind, jedoch aus Fig. 1a und weiteren Figuren hervorgehen.

Die Kette 1 weist ein Laufnetz in Form eines Kettennetzes 2 auf, das über die Lauffläche 3 des Reifens und zum Teil auch über die Schultern des Reifens verläuft und das auf beiden Seiten des Reifens durch je einen Spannstrang, in diesem Fall eine Spannkette 4, in der über die Lauffläche gespannten Form gehalten wird (in Fig. 1 ist nur einer der beiden Spannstränge 4 sichtbar; der andere liegt in analoger Weise auf der gegenüber liegenden Seite). Das Kettennetz wird aus einer Anzahl von Kettensträngen 5, 6 gebildet, die untereinander durch Verbindungsringe 7 verbunden sind. Die Kettenstränge 5, 6 können je nach Gestaltung der Kette 1 gleich viele oder eine unterschiedliche Anzahl von Kettengliedern 8 aufweisen; im Falle der gezeigten Reifenkette 1 haben beiden Typen von Kettensträngen je vier Kettenglieder 8. Die Schulterkettenstränge sind mit dem Bezugszeichen 12 versehen.

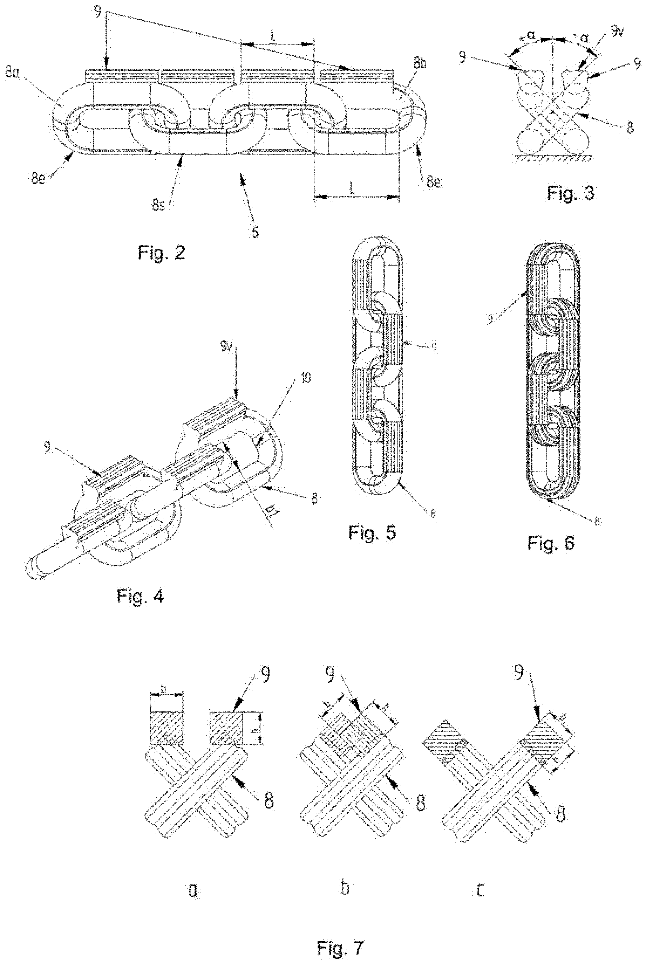

Fig. 2 zeigt einen Kettenstrang 5, wobei eine gerade Anzahl von Kettengliedern 8 bevorzugt ist, da sich durch die beiden Verbindungsringe 7 mit übereinstimmender Orientierung am Ende des Kettenstrangs zwangsfrei eine Positionierung der Kettenglieder in einer schrägen, insbesondere um einen Winkel von im Wesentlichen 45° geneigten, Stellung ergibt. Dies liegt daran, dass die beiden Endglieder in Folge der geraden Anzahl der Kettenglieder zu einander querliegend orientiert sind (vgl. Fig. 3) und somit eine Stellung, in der beide Endglieder orthogonal durch die Ringe 7 verlaufen, nicht möglich ist. Es ergibt sich daher "automatisch" eine Schrägstellung der Kettenglieder 8. Der Winkel ist im Allgemeinen ein spitzer Winkel gegenüber der Lage in aufrechter Stellung, wobei sich der genaue Wert des Winkels aus der inneren Weite des Kettengliedes und der Dicke des Verbindungsringes ergibt.

Die Kettenglieder 8 besitzen eine Form, die wie in den Figuren gezeigt, bevorzugt ellipsoidähnlich ist, mit zueinander parallelen Schenkeln 8s, welche an ihren Enden durch Buge 8b miteinander verbunden sind.

Fig. 3 zeigt den Kettenstrang 5 in einer Längsansicht, d.h. entlang der Verlaufsrichtung des Kettenstrangs, wobei zur Vereinfachung der Kettenstrang gestreckt dargestellt ist; eine Krümmung gemäß der Umfangskrümmung des Laufnetzes 3 ist der Einfachheit halber nicht berücksichtigt. Die beiden gezeigten Kettenglieder 8 stehen zueinander senkrecht, sind jedoch gegenüber dem Laufnetz 3, auf dem sie mit je einer Längskante aufliegen, um einen Winkel von α = 45° geneigt, und zwar abwechselnd um +α und -α. Der Winkel wird hierbei in Bezug auf die Normale der Lauffläche, das ist die zur Lauffläche senkrecht stehende Achse, am Ort des jeweiligen Kettenglieds gemessen. Im Allgemeinen kann der Winkel α auch andere Werte als 45° annehmen, wobei insbesondere Winkelwerte von 30° bis 60° (somit 45° ± 15°) günstig sind. Der im Einzelfall gewählte Winkel ergibt sich aus der für die Gleitschutzkette typischer Weise vorgesehenen Belastungssituation. Die aufeinanderfolgenden Kettenglieder sind dann zueinander um einen Winkel 2α (anstatt 90°) geneigt.

Man kann nun den Fig. 1, 1a, 2 und 3 sowie ebenso den folgenden Figuren entnehmen, dass die Kettenglieder 8 des Kettennetzes im Bereich der Lauffläche mit Verschleißstegen 9 versehen sind, welche je mit den Kettengliedern 8 fest verbunden sind und die sich parallel zu den Längsschenkeln 8s der Kettenglieder erstrecken. Die Verschleißstege 9 sind zweckmäßigerweise auf die Kettenglieder 8 aufgeschweißt und können auch aus einem verschleißfesteren Material als übliche Kettenglieder bestehen. Lediglich um ein Beispiel zu nennen, können die Kettenglieder 8 aus einem Mangan/Bor-Stahl (K2) und die Verschleißstege 9 aus einem Mangan-Chrom-Stahl (20MnCr5) bestehen. Andererseits können die Kettenglieder 8 und die Verschleißstege 9 aus demselben Material hergestellt sein.

Die Verschleißfläche 9v kann zur Verbesserung der Greiffähigkeit profiliert sein. Insbesondere kann die Verschleißfläche 9v ein Rillenprofil mit sich parallel zu dem zugehörigen Längsschenkel des Kettengliedes 8 erstreckenden Vertiefungen und Erhebungen aufweisen, wie in den Figuren 2 bis 6 dargestellt, wobei die Fig. 4 und die Fig. 5 den Kettenstrang der Fig. 2, jedoch aus anderen Blickrichtungen gesehen, zeigen.

Die Kettenglieder 8 der Ausführungen nach Fig. 2 bis 5 sind Kettenglieder mit im Wesentlichen glatter Oberfläche, wogegen bei der Ausführung nach Fig. 6 die Kettenglieder 8 ein gewelltes Profil besitzen, wodurch die Oberfläche und das Härtevolumen erhöht werden können.

Um eine maximale Traktionsfähigkeit der Kette zu erhalten, ist es im Allgemeinen zweckmäßig, wenn sich die Verschleißstege 9 in Richtung ihrer Höhe h im Wesentlichen senkrecht zur Lauffläche 3 erstrecken, wie dies insbesondere den Fig. 3 und 7a entnehmbar ist. In diesem Fall steht die Höhe h der Verschleißstege 9 unter einem Winkel von 45° zur Längserstreckung der Kettenglieder 8.

Andererseits kann man in den Fig. 7b und 7c erkennen, dass auch andere Lagen der Verschleißstege 9 bezüglich der Kettenglieder 8 möglich und in gewissen Anwendungsfällen bzw. Bodenverhältnissen zweckmäßig sind. In Fig. 7b steht die Höhe h der Verschleißstege 9 senkrecht zur Längserstreckung der Kettenglieder 8, wogegen in Fig. 7 die Höhe h der Verschleißstege 9 in Richtung der Längserstreckung der Kettenglieder 8 verläuft.

Die Länge 1 Verschleißstege 9 entspricht, wie in Fig. 2 eingezeichnet, in zweckmäßiger, nicht jedoch notwendiger Weise, im Wesentlichen der Länge L der Längsschenkel 8s der Kettenglieder 8, wogegen die Verschleißstege 9 in bevorzugter Weise eine Breite b aufweisen, die, wie in Fig. 7a eingezeichnet, im Wesentlichen der Breitenabmessung B der Längsschenkel der Kettenglieder 8 entspricht. Allerdings kann es in vielen Fällen auch zweckmäßig sein, die Verschleißstege 9 breiter als die Längsschenkel der Kettenglieder 8 auszubilden.

Es ist weiters erwähnenswert, dass mit Vorteil auch Glieder der Schulterkettenabschnitte 12 mit Verschleißstegen 9 versehen sein können, wobei insbesondere das erste an einen Verbindungsring anschließende Kettenglied eines Abschnittes 12 einen Verschleißsteg 9 trägt, wie in Fig. 1a gezeigt.

Die Schulterkettenglieder der Abschnitte 12 weisen meist runden Querschnitt auf und eine kleinere innere Breite als die Glieder an der Lauffläche, sodass deren Auftragmaß geringer und auch der Querschnitt reduziert ist. Dadurch kann das Gesamtgewicht der Kette reduziert werden, die Reifen werden an der Flanke geschont und das zumindest eine Verschleißglied ergibt eine bessere Traktion. Auf Grund der geringeren Querschnitte der inneren und äußeren Seitenketten bzw. Spannketten verringert sich gleichfalls das Gewicht der gesamten Kette. Auch das direkte Aufschweißen der Verschleißstege auf die Kettenglieder bringt eine Gewichtsersparnis gegenüber herkömmlichen Ketten, bei welchen die Verschleißstege mit Hilfe von Aufpressgliedern auf liegende Glieder aufgeschweißt werden müssen.

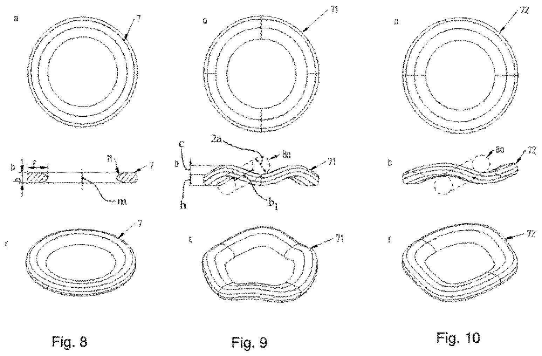

Die Fig. 8a, 8b und 8c zeigen einen Verbindungsring 7 in einer Draufsicht, in einer Seitenansicht im Schnitt und in einer perspektivischen Ansicht. Der Ring 7 hat, um eine stabile Form des Spurfeldes des Kettennetzes 2 zu erreichen, in vorteilhafter Weise eine abgeflachte Form, die sich möglichst in die innere Kettenrundung 10, siehe Fig. 4, in der geneigten Stellung einfügt. Um die erforderliche Querschnittsfläche des Ringstranges zu erreichen, wird der radiale Durchmesser des Ringstranges entsprechend vergrößert. Wie insbesondere in Fig. 8b gezeigt, ergibt sich somit ein Querschnitt des Ringstranges mit einer Dicke d und einem Radialmaß ("Breite") r, wobei die Breite günstiger Weise mindestens das Doppelte der Dicke d beträgt. Die der Mittelachse m zugewandte Seite 11 des Querschnitts hat bevorzugt eine ovale Form, beispielsweise gemäß einer (halben) Ellipse (entsprechend eines Ellipsenabschnitts). Mit dieser Form kann sich der Verbindungsring an die Form der inneren Rundung 10, die von dem schräggestellten Kettenglied gebildet wird, anlegen und somit über das Kettenglied die Orientierung des Kettenstrangs zusätzlich stabilisieren.

Das Verhältnis zwischen Dicke d und Breite r des Rings 7 wird im Wesentlichen durch den Querschnitt des Strangs bestimmt, der aufgrund der erforderlichen Kraftaufnahme durch den Rings benötigt wird. Der Ring 7 weist im Vergleich zu einem "normalen" Ring eine geringere Dicke auf, um in dem schräg stehenden Kettenglied Platz zu haben. Dies würde einen Verlust des Widerstandsmoments bedeuten, der durch eine entsprechende Vergrößerung der Breite kompensiert wird.

Eine günstige Auslegung der Breite r eines Verbindungsrings ergibt sich auch dadurch, dass sie größer ist als die innere Weite bi der Kettenglieder 8, siehe Fig. 4, die an diesen Verbindungsring angebunden (eingehängt) sind. Dies verhindert ein Kippen des Verbindungsrings gegenüber dem Kettenglied, insbesondere ein Abwinkeln gegenüber der Längsachse des Kettenstrangs, sodass der Verbindungsring in der vorgesehenen Lageposition bleibt und sich nicht verdrehen kann, und schließt die Gefahr aus, dass der Ring sich verdreht oder abwinkelt und so eine Stellung einnimmt, von der er nur schwerlich in die Ausgangsposition zurückkehren kann. Dies wäre besonders bei der Montage/Demontage der Reifenkette lästig und könnte außerdem dazu führen, dass sich Kettenteile ineinander verkeilen (Verknäueln).
Die Fig. 9a, 9b und 9c zeigen eine Variante eines Verbindungsringes 71, der eine gekröpfte oder gewellte Formgebung aufweist. Durch die Kröpfung kann sich die Kette besser in der gewünschten schrägen Stellung ausrichten und es ergibt sich eine höhere Formstabilität. Auch hier ist die Querschnittsform des Ringstranges bevorzugt in Bezug auf die Dicke abgeflacht. Zusätzlich ist der Ring 71 gekröpft, d.h. gegenüber einer gedachten Ebene abwechselnd um eine Kröpfungsweite c ausgelenkt. In der Zeichnung ist der gesamte Kröpfungshub mit 2c bemaßt. Der Kröpfungshub 2c ist so gewählt, dass er entsprechend der Formgebung des endständigen Kettenglieds 8a, das in den Ring 71 eingehängt ist, mit einer schrägen Stellung des Kettenglieds entsprechend dem Winkel α für eine stabile Lagebeziehung sorgt. Der Ring 71 ist über seinen Gesamtumgang dreifach gekröpft, und ermöglicht somit die Verknüpfung der Enden von drei Kettensträngen gemäß der Erfindung.
Für ein Kettenglied 8a mit kreisrundem Strangquerschnitt mit einem Radius a und der inneren Weite bi ergibt sich somit der ideale Wert der Kröpfung als: 2c = 2a + d - (b_{I}+2a) cos α, wobei a den Radius des Querschnitts eines Kettengliedes 8, b_{I} die innere Weite des Kettenglieds 8a, d die Dicke des Ringes 71, und der Winkel α der Neigungswinkel gegenüber der aufrechten (d.h. auf der Lauffläche stehenden) Stellung ist.
Fig. 10a bis 10c zeigen eine weitere Variante eines Verbindungsringes 72, wobei dieser Ring 72 eine vierfache Kröpfung aufweist. Somit eignet sich dieser Ring besonders zum Verknüpfen von vier Kettensträngen an ihren Enden. Für die Dimensionierung der Kröpfung gilt das zuvor Gesagte in analoger Weise.
Natürlich ist der Fachmann in der Lage die Erfindung in Anbetracht der dargestellten Ausführungsformen und der Beschreibung abzuändern und im Rahmen des Schutzbereiches der beigefügten Ansprüche an gegebene Erfordernisse anzupassen.

### Bezugszeichenliste

- 1: Reifenkette
- 2: Kettennetz
- 3: Lauffläche
- 4: Spannkette
- 5, 6: Kettenstränge
- 7: Verbindungsringe
- 8: Kettenglieder
- 8a: Endglied
- 8b: Buge
- 8s: Längsschenkel, Schenkel
- 9: Verschleißstege
- 9v: Verschleißfläche
- 10: innere Kettenrundung
- 11: Seite des Querschnitts
- 12: Schulterkettenabschnitte
- 71, 72: gekröpfte Ringe
- a: Radius des Querschnitts des Endglieds 8a
- b: Breite der Stege 9
- b_{I}: innere Weite des Endglieds 8a
- B: Breitenabmessung der Längsschenkel 8s
- c: Kröpfungsweite
- h: Höhe der Verschleißstege
- l: Länge der Verschleißstege
- L: Länge von 8s
- m: Mittelachse
- r: Breite (Radialmaß) des Verbindungsringes
- α: Neigungswinkel

## Patentansprüche

1. Kette (1) zur Montage an einem Fahrzeugreifen, insbesondere Gleitschutzkette, mit einem Kettennetz (2), welches im montierten Zustand der Kette zumindest auf der Lauffläche (3) eines Fahrzeugreifens angeordnet ist und eine Anzahl von Kettensträngen (5, 6) aufweist, die jeweils aus einer Anzahl von Kettengliedern (8) mit je im Wesentlichen geraden und zueinander parallelen Längsschenkeln (8s) gebildet sind und die an ihren Enden miteinander durch Verbindungsringe (7), verbunden sind und die Verbindungsringe (7) im montierten Zustand der Kette (1) im Wesentlichen mit ihrer Hauptebene parallel zur Lauffläche orientiert sind und den Kettengliedern Verschleißelemente zugeordnet sind,
**dadurch gekennzeichnet, dass**
die Verschleißelemente als Verschleißstege (9) ausgebildet sind, welche mit Kettengliedern (8) des Kettennetzes (2) fest verbunden sind und die sich parallel zu den Längsschenkeln (8s) der Kettenglieder (8) erstrecken und die Kettenglieder (8) der Kettenstränge (5, 6) im montierten Zustand der Kette (1) auf der Lauffläche (3) aufliegend in abwechselnd positivem und negativem Winkel (+α, -α) in Bezug auf die Lauffläche (3) schräg gestellt sind.

2. Kette (1) nach Anspruch 1, **dadurch gekennzeichnet, dass** die Verschleißstege (9) eine profilierte Verschleißfläche (9v) besitzen.

3. Kette (1) nach Anspruch 2, **dadurch gekennzeichnet, dass** die Verschleißfläche (9v) der Verschleißstege (9) ein Rillenprofil mit sich parallel zu dem zugehörigen Längsschenkel (8s) erstreckenden Vertiefungen und Erhebungen aufweist.

4. Kette (1) nach einem der Ansprüche 1 bis 3, **dadurch gekennzeichnet, dass sich** die Verschleißstege (9) in Richtung ihrer Höhe (h) im Wesentlichen senkrecht zur Lauffläche (3) erstrecken.

5. Kette (1) nach einem der Ansprüche 1 bis 4, **dadurch gekennzeichnet, dass** die Verschleißstege (9) eine Länge (l) aufweisen, die im Wesentlichen der Länge (L) der Längsschenkel der Kettenglieder (8) entspricht.

6. Kette (1) nach einem der Ansprüche 1 bis 5, **dadurch gekennzeichnet, dass** die Verschleißstege (9) mindestens eine Breite (b) aufweisen, die im Wesentlichen der Breitenabmessung (B) der Längsschenkel der Kettenglieder (8) entspricht.

7. Kette (1) nach einem der Ansprüche 1 bis 6, **dadurch gekennzeichnet, dass** die Verschleißstege (9) aus einem Material bestehen, das verschleißfester ist, als das Material der Kettenglieder (8).

8. Kette (1) nach einem der Ansprüche 1 bis 7, **dadurch gekennzeichnet, dass** die Verschleißstege (9) auf die Kettenglieder (8) aufgeschweißt sind.

9. Kette (1) nach einem der Ansprüche 1 bis 8, **dadurch gekennzeichnet, dass** die Anzahl der Kettenglieder (8) in den Kettensträngen (5, 6) gerade ist, insbesondere zwei, vier oder sechs.

10. Kette (1) nach einem der Ansprüche 1 bis 9, **dadurch gekennzeichnet, dass** zumindest die Kettenglieder am Ende der Kettenstränge (5, 6) eine Innenöffnung aufweisen, in die ein Ringstrang des Verbindungselements, insbesondere der Verbindungsring (7), in einem spitzen Winkel zur Hauptebene des jeweiligen Kettengliedes aufnehmbar ist, wobei der Winkel bevorzugt einen Wert von 45° ± 15° hat.

11. Kette (1) nach einem der Ansprüche 1 bis 10, **dadurch gekennzeichnet, dass** die Verbindungsringe (7) im montierten Zustand der Kette im Wesentlichen mit ihrer Hauptebene parallel zur Lauffläche (3) orientiert sind, wobei bei zumindest einigen der Verbindungsringe (7) der Ringstrang gegenüber der Hauptebene des Ringes gekröpft ist, nämlich gegenüber einer gedachten Ebene abwechselnd um eine Kröpfungsweite (c) ausgelenkt, wodurch sich die Kette besser in der gewünschten schrägen Stellung ausrichten kann.

12. Kette (1) nach einem der Ansprüche 1 bis 11, **dadurch gekennzeichnet, dass** bei zumindest einigen der Verbindungsringe (7) der Ringstrang bei einer einer Mittelachse (m) zugewandten Seite seines Querschnitts (11) eine ovale Formgebung, vorzugsweise eines Ellipsenabschnitts aufweist.

13. Kette (1) nach einem der Ansprüche 1 bis 12, **dadurch gekennzeichnet, dass** zumindest das erste an einen Verbindungsring (7) anschließende Kettenglied eines Schulterkettenabschnittes (12) einen Verschleißsteg (9) trägt.

## Claims

1. A chain (1) for mounting on a vehicle tire, in particular a sliding block chain, having a chain mesh (2) which, in the mounted state of the chain, is arranged at least on the tread (3) of a vehicle tire and has a number of chain strands (5, 6) each formed from a number of chain links (8) each having longitudinal legs (8s) which are substantially straight and parallel to one another and are connected to one another at their ends by connecting rings (7), and in the mounted state of the chain (1), the connecting rings (7) are oriented with their main plane substantially parallel to the tread (3) and wear elements are associated with the chain links,
**characterized in that**
the wear elements are formed as wear webs (9) which are firmly connected to chain links (8) of the chain mesh (2) and which extend parallel to the longitudinal legs (8s) of the chain links (8) and, in the mounted state of the chain (1), the chain links (8) of the chain strands (5, 6) are placed on the tread (3) and are positioned inclined with respect to the tread (3) at alternately positive and negative angles (+α, -α).

2. The chain (1) according to claim 1, **characterized in that** the wear webs (9) have a profiled wear surface (9v) .

3. The chain (1) according to claim 2, **characterized in that** the wear surface (9v) of the wear webs (9) comprises a grooved profile with recesses and elevations extending parallel to the associated longitudinal leg (8s).

4. The chain (1) according to any one of claims 1 to 3, **characterized in that** the wear webs (9) extend in the direction of their height (h) substantially perpendicular to the tread (3).

5. The chain (1) according to any one of claims 1 to 4, **characterized in that** the wear webs (9) have a length (1) that corresponds substantially to the length (L) of the longitudinal legs of the chain links (8).

6. The chain (1) according to any one of claims 1 to 5, **characterized in that** the wear webs (9) have at least a width (b) that corresponds substantially to the width dimension (B) of the longitudinal legs of the chain links (8).

7. The chain (1) according to any one of claims 1 to 6, **characterized in that** the wear webs (9) are made from of a material that has greater wear resistance than the material of the chain links (8).

8. The chain (1) according to any one of claims 1 to 7, **characterized in that** the wear webs (9) are welded to the chain links (8).

9. The chain (1) according to any one of claims 1 to 8, **characterized in that** the number of the chain links (8) in the chain strands (5, 6) is an even number, in particular two, four or six.

10. The chain (1) according to any one of claims 1 to 9, **characterized in that** at least the chain links have an inside opening at the end of the chain strands (5, 6) in which a ring strand of the connecting element, in particular the connecting ring (7), can be accommodated at an acute angle to the main plane of the respective chain link, wherein the angle preferably has a value of 45° ± 15°.

11. The chain (1) according to any one of claims 1 to 10, **characterized in that** in the mounted state of the chain, the connecting rings (7) are oriented with their main plane substantially parallel to the tread (3), wherein at least for some of the connecting rings (7) the ring strand is cranked with respect to the main plane of the ring, namely alternately deflected with respect to an imaginary plane by a crank width (c), whereby the chain the is able to better align itself in the desired inclined position.

12. The chain (1) according to any one of claims 1 to 11, **characterized in that** for at least some of the connecting rings (7), the ring strand has an oval shape, preferably of an ellipse section, on a side of its cross-section (11) facing a central axis (m).

13. The chain (1) according to any one of claims 1 to 12, **characterized in that** at least the first chain link of a shoulder chain section (12) connected to a connecting ring (7) carries a wear web (9).

## Revendications

1. Chaîne (1) pour le montage sur un pneu de véhicule, en particulier chaîne antidérapante, comportant un maillage de chaîne (2), lequel est disposé, à l'état monté de la chaîne, au moins sur la bande de roulement (3) d'un pneu de véhicule et présente un nombre de brins de chaîne (5, 6) qui sont formés chacun d'un nombre de maillons de chaîne (8) avec chacun des branches longitudinales (8s) sensiblement droites et parallèles entre elles et qui sont reliés entre eux par des anneaux de liaison (7) à leurs extrémités, et les anneaux de liaison (7), à l'état monté de la chaîne (1), sont orientés sensiblement avec leur plan principal parallèle à la bande de roulement et des éléments d'usure sont attribués aux maillons de chaîne,
**caractérisée par le fait que**
les éléments d'usure sont réalisés sous la forme de barrettes d'usure (9), lesquelles sont liées solidement aux maillons de chaîne (8) du maillage de chaîne (2) et qui s'étendent parallèlement aux branches longitudinales (8s) des maillons de chaîne (8) et les maillons de chaîne (8) des brins de chaîne (5, 6) à l'état monté de la chaîne (1) sont placés en oblique par rapport à la bande de roulement (3) à un angle en alternance positif et négatif (+α, -α) en reposant sur la bande de roulement (3).

2. Chaîne (1) selon la revendication 1, **caractérisée par le fait que** les barrettes d'usure (9) possèdent une surface d'usure profilée (9v).

3. Chaîne (1) selon la revendication 2, **caractérisée par le fait que** la surface d'usure (9v) des barrettes d'usure (9) présente un profil rainuré ayant des creux et des saillies s'étendant parallèlement à la branche longitudinale respective (8s).

4. Chaîne (1) selon l'une des revendications 1 à 3, **caractérisée par le fait que** les barrettes d'usure (9) s'étendent sensiblement perpendiculairement à la bande de roulement (3) dans la direction de leur hauteur (h).

5. Chaîne (1) selon l'une des revendications 1 à 4, **caractérisée par le fait que** les barrettes d'usure (9) présentent une longueur (l) qui correspond sensiblement à la longueur (L) des branches longitudinales des maillons de chaîne (8).

6. Chaîne (1) selon l'une des revendications 1 à 5, **caractérisée par le fait que** les barrettes d'usure (9) présentent au moins une largeur (b) qui correspond sensiblement à la dimension en largeur (B) des branches longitudinales des maillons de chaîne (8).

7. Chaîne (1) selon l'une des revendications 1 à 6, **caractérisée par le fait que** les barrettes d'usure (9) sont faites en un matériau qui est plus résistant à l'usure que le matériau des maillons de chaîne (8).

8. Chaîne (1) selon l'une des revendications 1 à 7, **caractérisée par le fait que** les barrettes d'usure (9) sont soudées aux maillons de chaîne (8).

9. Chaîne (1) selon l'une des revendications 1 à 8, **caractérisée par le fait que** le nombre des maillons de chaîne (8) dans les brins de chaîne (5, 6) est pair, en particulier deux, quatre ou six.

10. Chaîne (1) selon l'une des revendications 1 à 9, **caractérisée par le fait qu'**au moins les maillons de chaîne à l'extrémité des brins de chaîne (5, 6) présentent une ouverture interne dans laquelle un brin annulaire de l'élément de liaison, en particulier de l'anneau de liaison (7), est apte à être reçu à un angle aigu par rapport au plan principal du maillon de chaîne respectif, l'angle ayant, de préférence, une valeur de 45°±15°.

11. Chaîne (1) selon l'une des revendications 1 à 10, **caractérisée par le fait que** les anneaux de liaison (7), à l'état monté de la chaîne, sont orientés sensiblement avec leur plan principal parallèle à la bande de roulement (3), où, dans le cas d'au moins quelques-uns des anneaux de liaison (7), le brin annulaire est décroché vis-à-vis du plan principal de l'anneau, à savoir est dévié vis-à-vis d'un plan fictif en alternancez d'une largeur de décrochement (c), ce par quoi la chaîne peut mieux s'orienter dans la position oblique souhaitée.

12. Chaîne (1) selon l'une des revendications 1 à 11, **caractérisée par le fait que**, dans le cas d'au moins quelques-uns des anneaux de liaison (7), le brin annulaire présente, dans le cas d'un côté de sa section transversale (11) tourné vers un axe moyen (m), une conformation ovale, de façon préférée une section elliptique.

13. Chaîne (1) selon l'une des revendications 1 à 12, **caractérisée par le fait qu'**au moins le premier maillon de chaîne faisant suite à un anneau de liaison (7) d'une section de chaîne d'épaulement (12) porte une barrette d'usure (9).
